# EUROPÄISCHE PATENTANMELDUNG

(11) **EP 4 246 682 A1**
(43) Veröffentlichungstag der Anmeldung: **20.09.2023**
(21) Anmeldenummer: 23160233.5
(22) Anmeldetag: 06.03.2023
(51) Int. Cl.: H01M 50/204, H01M 50/242, H01M 50/249

(54) **ELEKTRISCHER ENERGIESPEICHER MIT LASTDURCHLEITUNG IM CRASHFALL**

(30) Priorität: 16.03.2022 DE 102022106050
(71) Anmelder: MAN Truck & Bus SE, 80995 München (DE)
(72) Erfinder: Wilke, Florian, 80995 München (DE); Kratzer, Sebastian, 80995 München (DE); Häupler, Martin, 80995 München (DE); Umbreit, Martin, 80995 München (DE); Aldiek, Björn, 74074 Heilbronn (DE)
(74) Vertreter: v. Bezold & Partner Patentanwälte - PartG mbB

(57) **Zusammenfassung**

Die Erfindung betrifft einen elektrischen Energiespeicher (100) für ein Kraftfahrzeug. Der elektrische Energiespeicher (100) weist ein Gehäuse (10) mit einer ersten Seitenwand (10a) und einer zweiten Seitenwand (10b) auf. Der elektrische Energiespeicher (100) weist ferner zumindest eine Versteifungsstruktur (20) zur Versteifung des Gehäuses (10) auf, die sich zwischen der ersten und zweiten Seitenwand (10a, 10b) des Gehäuses (10) erstreckt. Dabei umfasst die zumindest eine Versteifungsstruktur (20) einen aufgeweiteten Endbereich (20a) zum Abstützen der zumindest eine Versteifungsstruktur (20) auf der ersten Seitenwand (10a) bei einem Aufprallereignis.

## Beschreibung

Die Erfindung betrifft einen elektrischen Energiespeicher für ein Kraftfahrzeug sowie ein Kraftfahrzeug mit einem ebensolchen Energiespeicher.

Im Stand der Technik ist es bekannt, Elektro- und Hybridfahrzeuge mit elektrischen Energiespeichern (sog. Batteriepacks) auszustatten, um mittels der dort gespeicherten bzw. speicherbaren elektrischen Energie die Antriebsaggregate der entsprechenden Fahrzeuge anzutreiben. Derartige Energiespeicher bestehen üblicherweise aus einer Vielzahl elektrisch miteinander verschalteter Batteriezellen (z. B. Lithium-Ionen-Batteriezellen), die z. B. in Form von mehreren Batteriemodulen gruppiert sein können.

Um die Batteriezellen bzw. den Energiespeicher gegenüber äußeren Einflüssen, insbesondere Feuchtigkeit, zu schützen, werden die vorgenannten Komponenten zumeist mit einem geschlossenen (Batterie-)Gehäuse umhaust. Neben dem Schutz vor Umwelteinflüssen besteht dabei jedoch auch ein Bedarf an einer möglichst robusten Lagerung, welche die im Batteriemodul enthaltenen Batteriezellen sicher vor Beschädigungen, z. B. in einem Crashfall, schützt. Dies ist bei der Verwendung von Lithium-Ionen-Batteriezellen besonders relevant, da diese zumeist entflammbare Elektrolyten enthalten, die bei einem Fahrzeugcrash bzw. einer starken Deformation der Batteriezellen freigesetzt und durch Funken oder Lichtbögen entzündet werden könnten.

Zum Schutz der Batteriezellen bzw. der Batteriemodule vor externen Belastungen ist es bei gattungsgemäßen Energiespeichern bekannt, die entsprechenden Komponenten mit sogenannten Crashkäfigen zu umbauen. Bevorzugt wird dabei ein möglichst großer, deformationsfreier und lastfreier Bauraum bereitgestellt. Der Nachteil dieser Methode liegt jedoch u. a. in ihrem Gewicht und Bauraumbedarf.

Entsprechend ist es Aufgabe der Erfindung, eine verbesserte Lagerung für Batteriekomponenten bereitzustellen, mit der möglichst auch die Nachteile der bisherigen Lösungen vermieden werden. Insbesondere ist es eine Aufgabe der Erfindung, eine möglichst geschützte Lagerung von Batteriekomponenten bereitzustellen, welche insbesondere in Crashsituationen ein möglichst hohes Maß an Sicherheit bietet.

Diese Aufgaben können mit den Merkmalen der unabhängigen Ansprüche gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Ein erster unabhängiger Aspekt der vorliegenden Offenbarung betrifft einen elektrischen Energiespeicher (z. B. einen Hochvolt-Energiespeicher) für ein Kraftfahrzeug. Bevorzugt handelt es sich um einen elektrischen Energiespeicher für ein Nutzfahrzeug, wie z. B. einen Lastkraftwagen oder Omnibus. Der elektrische Energiespeicher weist dabei ein (z. B. rahmenförmiges) Gehäuse mit einer ersten Seitenwand und einer zweiten Seitenwand auf. Bevorzugt ist die zweite Seitenwand eine der ersten Seitenwand gegenüberliegende Seitenwand des Gehäuses.

Ferner weist der Energiespeicher zumindest eine Versteifungsstruktur auf. Die zumindest eine Versteifungsstruktur kann z. B. eine Strebe, Querstrebe und/oder Crash-Strebe sein. Bevorzugt dient die zumindest eine Versteifungsstruktur zur Versteifung des Gehäuses des elektrischen Energiespeichers. Die zumindest eine Versteifungsstruktur erstreckt sich dabei zwischen der ersten und zweiten Seitenwand des Gehäuses. D. h., über die zumindest eine Versteifungsstruktur können die erste und zweite Seitenwand miteinander verbunden sein. Auf vorteilhafte Weise kann dadurch ein direkter Lastpfad für eine möglichst biegemomentenfreie Lastdurchleitung zwischen der ersten und zweiten Seitenwand bereitgestellt werden.

Bevorzugt ist die zumindest eine Versteifungsstruktur hierbei lösbar am Gehäuse befestigt. Beispielsweise kann die zumindest eine Versteifungsstruktur mittels ein oder mehrerer Schraubverbindungen am Gehäuse befestigt bzw. verschraubt sein. Weiterhin umfasst die zumindest eine Versteifungsstruktur einen (z. B. T-förmig) aufgeweiteten Endbereich. Bevorzugt dient der (erste) aufgeweitete Endbereich zum Abstützen der zumindest eine Versteifungsstruktur auf der ersten Seitenwand bei einem Aufprallereignis (z. B. einem Crash-Fall). Bei dem vorgenannten Aufprallereignis kann es sich bevorzugt um ein Aufprallereignis (z. B. einen Stoß) auf die erste Seitenwand, wie z. B. einen Aufprall eines Fahrzeugs auf die erste Seitenwand, handeln. Auf vorteilhafte Weise kann dadurch eine möglichst große Anlagefläche zwischen der zumindest eine Versteifungsstruktur und der ersten Seitenwand beim Aufprallereignis bzw. im Crash-Fall erreicht werden, wodurch eine zuverlässige Aufnahme und Weitergabe von entsprechenden Crashkräften ermöglicht wird. Nach einem ersten Aspekt kann die zumindest eine Versteifungsstruktur mittels jeweils einer, vorzugsweise lösbaren, Schraubverbindung an der ersten und zweiten Seitenwand befestigt sein. D. h., die zumindest eine Versteifungsstruktur kann sowohl an der ersten Seitenwand (z. B. mittels einer ersten Schraubverbindung) als auch an der zweiten Seitenwand (z. B. mittels einer zweiten Schraubverbindung) verschraubt sein. Bevorzugt ist die zumindest eine Versteifungsstruktur ausschließlich über die vorgenannten jeweiligen Schraubverbindungen am Gehäuse befestigt. D. h., bevorzugt steht die zumindest eine Versteifungsstruktur nur über die erste und zweite Seitenwand mit dem Gehäuse in Kontakt. Auf vorteilhafte Weise wird dadurch eine einfache Möglichkeit zur Montage bzw. Demontage der Versteifungsstruktur bereitgestellt.

Gemäß einem weiteren Aspekt kann der aufgeweitete Endbereich einen sich zur ersten Seitenwand hin verbreiternden Querschnitt aufweisen. D. h., der Querschnitt des Endbereichs der zumindest einen Versteifungsstruktur kann sich zur ersten Seitenwand hin zumindest abschnittsweise vergrößern. Lediglich beispielhaft kann der aufgeweitete Endbereich z. B. keilfömig oder T-förmig ausgebildet sein.

Zudem oder alternativ kann der aufgeweitete Endbereich bezüglich einer Querachse der zumindest einen Versteifungsstruktur aufgeweitet sein. Als Querachse kann dabei bevorzugt eine Achse der zumindest einen Versteifungsstruktur verstanden werden, welche quer zur längsten Ausdehnung der zumindest einen Versteifungsstruktur verläuft. Bevorzugt ist die Querachse horizontal orientiert und/oder steht jeweils senkrecht auf einer Längs- und Hochachse der zumindest einen Versteifungsstruktur.

Zudem oder alternativ kann der aufgeweitete Endbereich zwei in entgegengesetzten Richtungen vom aufgeweiteten Endbereich abstehende Flügelelemente aufweisen, welche im Folgenden auch als erstes und zweites Flügelelement bezeichnet werden können. Als Flügelelement kann dabei bevorzugt eine, vorzugsweise flächige, Auskragung am Endbereich verstanden werden, die vom Endbereich abragt. Vorzugsweise sind die Flügelelemente jeweils plattenförmig ausgebildet und/oder jeweils integral-einstückig mit dem Endbereich bzw. der zumindest einen Versteifungsstruktur verbunden. Bevorzugt spannen die Flügelelemente zumindest abschnittsweise eine Abstützfläche des Endbereichs bzw. der zumindest einen Versteifungsstruktur auf, welche vorzugsweise zum Abstützen der zumindest einen Versteifungsstruktur auf der ersten Seitenwand beim Aufprallereignis dient. Vorzugsweise stehend die Flügelelemente jeweils senkrecht (z. B. parallel zur Querachse der zumindest einen Versteifungsstruktur) vom Endbereich ab. Insgesamt ermöglichen all die vorgenannten Varianten auf vorteilhafte Weise eine Vergrößerung des Endbereichs und damit der Anlagefläche zwischen der zumindest eine Versteifungsstruktur und der ersten Seitenwand beim Aufprallereignis.

Nach einem weiteren Aspekt kann der aufgeweitete Endbereich eine der ersten Seitenwand zugewandte Stirnseite aufweisen. Bevorzugt ist die Stirnseite plan und/oder entlang einer Längsachse der zumindest einen Versteifungsstruktur orientiert. Besonders bevorzugt weist die Stirnseite die vorgenannte, durch die Flügelelemente aufgespannte, Abstützfläche auf.

Gemäß einem weiteren Aspekt können die Stirnseite und die erste Seitenwand voneinander beabstandet sein. D. h., bevorzugt stehen die Stirnseite und die erste Seitenwand nicht in unmittelbarem Kontakt miteinander. Vorzugsweise sind die Stirnseite und die erste Seitenwand dabei durch einen Spalt voneinander beabstandet. Der Spalt kann hierbei beispielsweise kleiner als 1 mm sein. Lediglich beispielhaft können die Stirnseite und die erste Seitenwand im Wesentlichen 0.6 mm voneinander beabstandet sein. Vorzugsweise sind die Stirnseite und die erste Seitenwand durch den Spalt derart voneinander beabstandet, dass die Stirnseite und die erste Seitenwand durch eine Aufprall-Belastung beim Aufprallereignis in Anlage bringbar sind. D. h., die Spaltgröße ist vorzugsweise so dimensioniert, dass beim Aufprallereignis ein möglichst flächiges Anliegen der entsprechenden Komponenten zum Weiterleiten der entsprechenden Crash- bzw. Aufprallbelastungen ermöglicht werden kann. Dies kann beispielsweise durch entsprechende Crash-Tests mit möglichst definierter Aufprall-Belastung ermittelt werden. Der Vorteil der voneinander beabstandeten Montage der zumindest einen Versteifungsstruktur von der Seitenwand ist dabei, dass dadurch ein zuverlässiges Befestigen bzw. Verschrauben der Versteifungsstruktur möglichst unabhängig von Fertigungstoleranzen sichergestellt werden kann.

Nach einem weiteren Aspekt kann der aufgeweitete Endbereich einen von der Stirnseite abstehenden Vorsprung umfassen. Der Vorsprung kann beispielsweise hülsenförmig und/oder halbkreisförmig sein. Bevorzugt steht der Vorsprung entlang einer Längsachse der zumindest einen Versteifungsstruktur ab. Über den Vorsprung kann die zumindest eine Versteifungsstruktur an der ersten Seitenwand, vorzugsweise lösbar, befestigt sein. Der Vorsprung kann somit auch als Befestigungsstelle bezeichnet werden. Wie nachfolgend noch eingehender ausgeführt werden wird, kann der Vorsprung hierbei z. B. ein Durchgangsloch zur Aufnahme einer Schraube aufweisen. Bevorzugt steht die zumindest eine Versteifungsstruktur dabei ausschließlich über den vorgenannten Vorsprung mit der ersten Seitenwand in Kontakt. Auf vorteilhafte Weise kann dadurch eine schnelle und einfache Anbringung der zumindest einen Versteifungsstruktur ermöglicht werden.

Gemäß einem weiteren Aspekt kann sich der Vorsprung über maximal die Hälfte, vorzugsweise ein Drittel, besonders bevorzugt ein Viertel, einer Höhe der Stirnseite erstrecken. D. h., bevorzugt erstreckt sich der Vorsprung gerade nicht durchgängig über die gesamte Höhe der Stirnseite, sondern nur über einen Teil. Vorzugsweise ist der Vorsprung dabei oben an der Stirnseite angeordnet. Auf vorteilhafte Weise kann dadurch sowohl eine sichere Halterung der Versteifungsstruktur als auch eine möglichst große Anlagefläche sichergestellt werden.

Zudem oder alternativ weist der Vorsprung ein Durchgangsloch auf. D. h., der Vorsprung kann eine den Vorsprung, vorzugsweise gerade, durchdringende Öffnung aufweisen. Die Öffnung bzw. das Durchgangsloch ist hierbei bevorzugt entlang einer Hochachse der zumindest einen Versteifungsstruktur orientiert. Als Hochachse kann dabei bevorzugt eine Achse der zumindest einen Versteifungsstruktur verstanden werden, welche vertikal und/oder parallel zur Schwerkraftrichtung verläuft. Vorzugsweise steht die Hochachse senkrecht auf einer Längsund Querachse der zumindest einen Versteifungsstruktur. Auf vorteilhafte Weise wird dadurch eine einfache und sichere Möglichkeit zur Befestigung der Versteifungsstruktur bereitgestellt.

Zudem oder alternativ kann der Vorsprung bezüglich einer Längsmittelebene der zumindest einen Versteifungsstruktur versetzt angeordnet sein. D. h., der Vorsprung kann asymmetrisch zur Längsmittelebene positioniert sein. Als Längsmittelebene kann dabei eine durch die Längsachse und die Hochachse aufgespannte Ebene der zumindest einen Versteifungsstruktur verstanden werden. Entsprechend kann der Vorsprung bevorzugt bezüglich einer Querausdehnung der Stirnfläche nicht mittig an der Stirnseite angeordnet sein. Auf vorteilhafte Weise kann dadurch eine Schwächung des direkten Lastpfads zwischen der ersten und zweiten Seitenwand vermieden werden.

Nach einem weiteren Aspekt kann die erste Seitenwand einen (z. B. stufenförmigen) Absatz aufweisen. Als Absatz kann dabei bevorzugt eine Anformung an der ersten Seitenwand verstanden werden, welche von dieser heraussteht. Vorzugsweise ist die Anformung bzw. der Absatz dabei integral-einstückig mit der ersten Seitenwand verbunden. An dem Absatz kann die zumindest eine Versteifungsstruktur befestigt sein. Wie nachfolgend noch eingehender ausgeführt wird, kann der Absatz mit der zumindest einen Versteifungsstruktur (z. B. deren Vorsprung) über ein Befestigungsmittel (z. B. eine Schraube) verbunden sein. Durch das Vorsehen eines entsprechenden Absatzes kann auf vorteilhafte Weise eine Materialstärkung im Befestigungsbereich der zumindest einen Versteifungsstruktur erreicht werden. Ein weiterer Vorteil ist, dass dadurch sowohl eine sichere Halterung der Versteifungsstruktur als auch eine möglichst große Anlagefläche bereitgestellt werden kann, wie nachfolgend noch eingehender beschreiben werden wird.

Gemäß einem weiteren Aspekt können der Absatz und der Vorsprung über ein, vorzugsweise den Vorsprung durchdringendes, Befestigungsmittel miteinander verbunden sein. Beispielsweise können der Absatz und der Vorsprung über eine, vorzugsweise den Vorsprung durchdringende, Schraube miteinander verschraubt sein. Zudem oder alternativ kann der Absatz auch ein Sackloch oder ein Durchgangsgewinde aufweisen. Bevorzugt ist das Sackloch oder das Durchgangsgewinde des Absatzes dabei fluchtend zum Durchgangsloch des Vorsprungs angeordnet. D. h., das Sackloch oder das Durchgangsgewinde des Absatzes und das Durchgangsloch des Vorsprungs können zueinander ausgerichtet angeordnet sein, vorzugsweise so, dass ein (z. B. stiftförmiges) Befestigungsmittel in die entsprechenden Öffnungen aufnehmbar ist.

Nach einem weiteren Aspekt kann der Absatz eine, vorzugsweise vertikale, Anlagefläche zum Abstützen der Stirnseite des aufgeweiteten Endbereichs beim Aufprallereignis umfassen. Bevorzugt ist die Anlagefläche bzw. deren Flächennormale in Richtung der Längsachse der zumindest einen Versteifungsstruktur orientiert. Vorzugsweise sind die Anlagefläche und die Stirnseite voneinander beabstandet. D. h., bevorzugt stehen die Anlagefläche und die Stirnseite nicht unmittelbar miteinander in Kontakt. Die Anlagefläche und die Stirnseite können z. B. durch einen bzw. den Spalt voneinander beabstandet sein, vorzugsweise derart, dass die Anlagefläche und die Stirnseite durch eine Aufprall-Belastung beim Aufprallereignis in Anlage bringbar sind.

Zudem oder alternativ kann der Absatz eine, vorzugsweise horizontale, Auflagefläche umfassen. Bevorzugt ist die Auflagefläche bzw. deren Flächennormale in Richtung der Hochachse der zumindest einen Versteifungsstruktur orientiert. Auf der Auflagefläche kann der Vorsprung des aufgeweiteten Endbereichs zumindest abschnittsweise aufliegen. Beispielsweise kann eine Unterseite des Vorsprungs, vorzugsweise flächig, auf der Auflagefläche aufliegen und/oder in direktem Kontakt mit der Auflagefläche stehen. Insgesamt kann durch die vorgenannte Ausgestaltung des Absatzes auf vorteilhafte Weise sowohl ein Abschnitt zur Befestigung der Versteifungsstruktur (Auflagefläche) als auch ein möglichst großer Abschnitt zur Abstützung der Versteifungsstruktur beim Aufprallereignis (Anlagefläche) bereitgestellt werden.

Um auf vorteilhafte Weise den für die Versteifungsstruktur bei Aufprallereignis vorhandenen Abstützbereich weiter zu vergrößern, kann gemäß einem weiteren Aspekt der Absatz zwei von der Auflagefläche, vorzugsweise vertikal, abstehende Anformungen umfassen. Die zwei Anformungen können sich somit bevorzugt entlang der Hochachse der zumindest einen Versteifungsstruktur erstrecken. Weiterhin können sich die Anformungen jeweils seitlich des vorgenannten Vorsprungs erstrecken. D. h., die Anformungen können zumindest abschnittsweise auf derselben Höhe wie der Vorsprung angeordnet sein. Bevorzugt ist hierbei vorgesehen, dass die Anformungen jeweils eine Außenkontur aufweisen, die zumindest abschnittweise formangepasst zu einer Kontur des Vorsprungs ausgebildet ist. Für den beispielhaften Fall, dass der Vorsprung z. B. im Wesentlichen halbkreisförmig ist, können auch die Anformungen jeweils eine zumindest abschnittsweise halbkreisförmige Außenkontur aufweisen.

Nach einem weiteren Aspekt kann der elektrische Energiespeicher eine Stützplatte (z. B. ein Schubfeld) aufweisen. Bevorzugt dient dabei auch die Stützplatte zur Versteifung des Gehäuses. Beispielsweise kann die Stützplatte als eine bodenseitig am Gehäuse befestigte Stahlplatte ausgebildet sein. Über die Stützplatte können ferner die erste und zweite Seitenwand miteinander verbunden sein. Beispielsweise kann die Stützplatte dazu sowohl an der ersten Seitenwand als auch an der zweiten Seitenwand befestigt (z. B. angeschraubt) sein. Vorzugsweise dient die Stützplatte hierbei zum Durchleiten von Querkräften zwischen der ersten und zweiten Seitenwand. Auf vorteilhafte Weise kann dadurch in Kombination mit der zumindest einen Versteifungsstruktur, über welche vorrangig ein direktes Durchleiten von Längskräften erfolgen kann, eine möglichst umfassende Lastdurchleitung beim Aufprallereignis erreicht werden. Ein weiterer Vorteil ist zudem, dass durch die Aufteilung der Lasten auf mehrere Lastpfade eine Überlastung des Gehäuses möglichst vermieden werden kann.

Gemäß einem weiteren Aspekt kann die Stützplatte von der zumindest einen Versteifungsstruktur beabstandet angeordnet sein. D. h., zwischen der Stützplatte und der zumindest einen Versteifungsstruktur kann kein direkter mechanischer Kontakt bestehen. Zudem oder alternativ kann die Stützplatte, vorzugsweise umfangseitig, mehrere Aussparungen aufweisen. Beispielsweise kann die Stützplatte an ihrem Rand mehrere Einbuchtungen oder Ausnehmungen aufweisen. Bevorzugt dienen die Aussparungen dabei zur Gewichtsreduktion der Stützplatte. Bevorzugt sind die Aussparungen dabei in beim Aufprallereignis üblicherweise wenig beanspruchten Bereichen angeordnet.

Nach einem weiteren Aspekt kann die zumindest eine Versteifungsstruktur im Wesentlichen gerade verlaufen. D. h., die zumindest eine Versteifungsstruktur kann sich bevorzugt entlang einer gedachten, die erste und zweite Seitenwand miteinander verbindenden Geraden erstrecken.

Zudem oder alternativ kann die zumindest eine Versteifungsstruktur auf der ersten und/oder zweiten Seitenwand senkrecht stehen. D. h., eine Längsachse der zumindest einen Versteifungsstruktur kann bevorzugt mit der ersten und/oder zweiten Seitenwand einen Winkel von im Wesentlichen 90° einschließen.

Zudem oder alternativ kann die zumindest eine Versteifungsstruktur integral-einstückig ausgebildet sein. Beispielsweise kann die zumindest eine Versteifungsstruktur gegossen sein, bevorzugt aus einem Metall oder einer Metalllegierung. Bevorzugt umfasst die zumindest eine Versteifungsstruktur somit nicht mehrere aneinander befestigte Teile.

Zudem oder alternativ kann die zumindest eine Versteifungsstruktur als Vollprofil ausgebildet sein. Beispielsweise kann die zumindest eine Versteifungsstruktur ein Stahl-Vollprofil sein.

Zudem oder alternativ kann die zumindest eine Versteifungsstruktur dazu dienen, das Gehäuse hinsichtlich möglicher auf das Gehäuse wirkender Crash-Belastungen, insbesondere beim Aufprallereignis, zu versteifen. Zudem oder alternativ kann die zumindest eine Versteifungsstruktur zum gebündelten Einleiten von Crashkräften in die zumindest eine Versteifungsstruktur dienen.

Weiterhin betrifft die Offenbarung ein Kraftfahrzeug, aufweisend einen elektrischen Energiespeicher, wie er in diesem Dokument beschrieben ist. Hierbei sollen die in diesem Dokument im Zusammenhang mit dem elektrischen Energiespeicher beschriebenen Merkmale auch im Zusammenhang mit dem Kraftfahrzeug offenbart und beanspruchbar sein. Entsprechendes soll auch umgekehrt gelten. Das Kraftfahrzeug kann dabei z. B. ein elektrisch antreibbares Kraftfahrzeug sein. Bevorzugt ist das Kraftfahrzeug ein Nutzfahrzeug (z. B. ein Lastkraftwagen oder Omnibus). Hierbei kann unter einem Nutzfahrzeug im Allgemeinen ein Fahrzeug verstanden werden, das durch seine Bauart und Einrichtung speziell zur Beförderung von Personen, zum Transport von Gütern oder zum Ziehen von Anhängerfahrzeugen ausgelegt ist. Beispielsweise kann das Nutzfahrzeug ein Lastkraftwagen, ein Sattelschlepper, ein Baustellenfahrzeug und/oder eine landwirtschaftliche Maschine (z. B. ein Traktor) sein.

Die zuvor beschriebenen Aspekte und Merkmale der Erfindung sind beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1A: eine perspektivische Darstellung eines Energiespeichers gemäß einem Ausführungsbeispiel;
- Figur 1B: eine perspektivische Darstellung einer Versteifungsstruktur gemäß einem Ausführungsbeispiel;
- Figur 2A: eine Schnitt-Darstellung durch einen Energiespeicher gemäß einem Ausführungsbeispiel;
- Figur 2B: eine Schnitt-Darstellung durch einen Energiespeicher gemäß einem Ausführungsbeispiel;
- Figur 2C: eine vergrößerte Darstellung eines Ausschnitts von Figur 2B.
- Figur 3A: eine Aufsicht auf einen Energiespeicher gemäß einem Ausführungsbeispiel;
- Figur 3B: eine vergrößerte Darstellung eines Ausschnitts von Figur 3A.
- Figur 4A: eine Aufsicht auf einen Energiespeicher gemäß einem Ausführungsbeispiel; und
- Figur 4B: eine Aufsicht auf eine Anordnung mehrerer Energiespeicher gemäß einem Ausführungsbeispiel.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

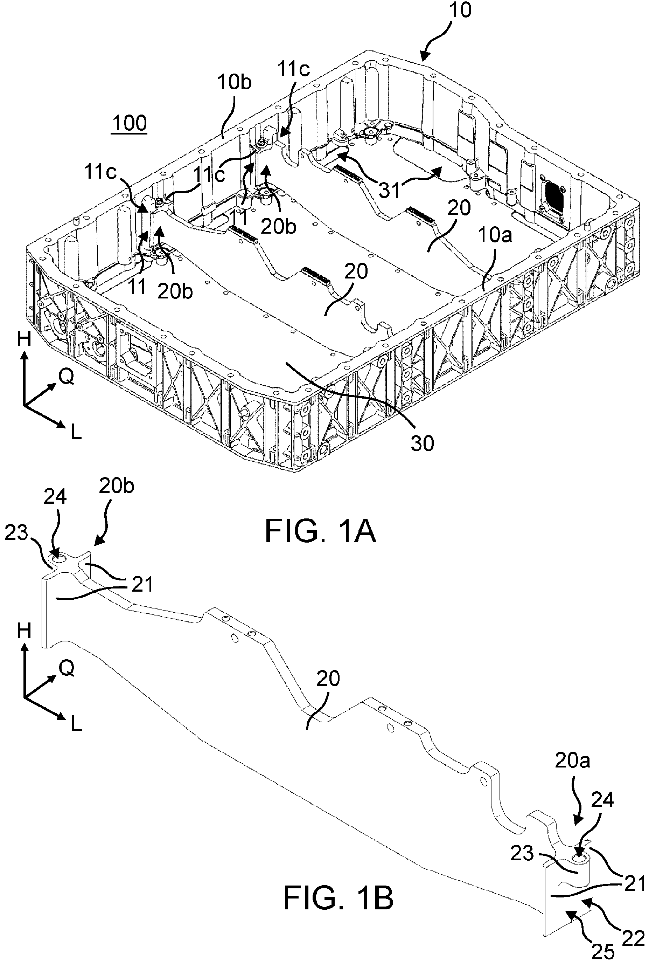

Die Figuren 1A, 2A, 2B, 3A, 4A und 4B zeigen (zumindest ausschnittsweise) einen elektrischen Energiespeicher 10 (auch Batteriepack genannt) für ein Kraftfahrzeug (nicht gesondert dargestellt). Das Kraftfahrzeug kann z. B. ein Lastkraftwagen, ein Omnibus, eine Baumaschine, eine Landmaschine oder ein Personenkraftwagen sein.

Der Energiespeicher 100 kann als Traktionsbatterie elektrische Energie für mindestens eine elektrische Antriebseinheit zum Antreiben des Kraftfahrzeugs bereitstellen. Beispielsweise kann das Kraftfahrzeug mittels eines zentralen Elektroantriebs, mittels mehrerer Elektroradnabenantriebe oder mehrerer radnaher Elektroantriebe angetrieben sein. Der Energiespeicher 100 kann dabei als ein Hochvolt-Energiespeicher ausgeführt sein. Der Hochvolt-Energiespeicher kann z. B. mit einer Gleichspannung zwischen 60 V und 1,5 kV, besonders bevorzugt zwischen 400 V und 850 V, betrieben werden bzw. betreibbar sein. Der Energiespeicher 100 kann extern über ein an einer Ladesteckdose des Kraftfahrzeugs angeschlossenes elektrisches Ladekabel aufladbar sein.

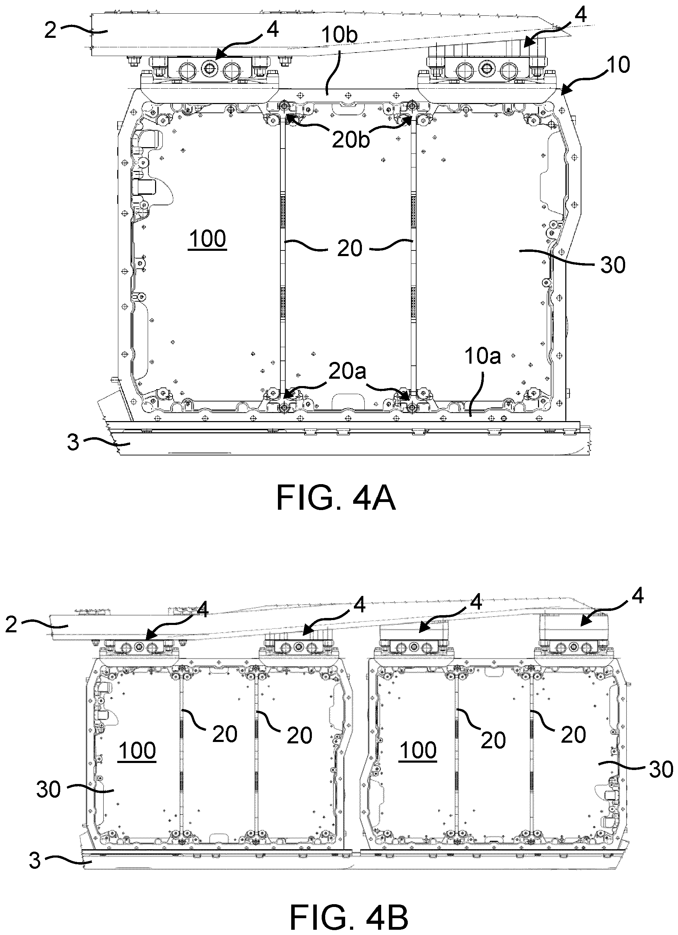

Der Energiespeicher 100 kann am Dach des Kraftfahrzeugs angebracht sein. Bevorzugt ist der Energiespeicher 100 jedoch an einem Fahrzeugrahmen des Kraftfahrzeugs angebracht. Wie beispielhaft in den Figuren 4A und 4B dargestellt ist, kann der Energiespeicher 100 beispielsweise an einer Außenlängsseite eines der Hauptlängsträger 2 eines als Leiterrahmen ausgeführten Fahrzeugrahmens des Kraftfahrzeugs angebracht sein.

Die Befestigung des Energiespeichers 100 am Hauptlängsträger 2 kann dabei mittels zumindest eines Halteelements 4, vorzugsweise mittels zumindest zweier Halteelemente 4, erfolgen. Das zumindest eine Halteelement 4 kann dabei auch als Konsole bezeichnet werden. Der Energiespeicher 100 kann über das zumindest eine Halteelement 4 beabstandet vom Hauptlängsträger 2 fixiert sein. D. h., das zumindest eine Halteelement 4 kann zwischen dem Energiespeicher 100 und dem Hauptlängsträger 2 angeordnet sein. Das zumindest eine Halteelement 4 kann einen ersten Endbereich aufweisen, der am Hauptlängsträger 2 befestigt (z. B. verschraubt und/oder vernietet) ist. Das zumindest eine Halteelement 4 kann einen zweiten Endbereich aufweisen, der an dem Energiespeicher 100 (z. B. dessen Gehäuse) befestigt (z. B. verschraubt und/oder vernietet) ist. Der Energiespeicher 100 und der Hauptlängsträger 2 können somit über das zumindest eine Halteelement 4 verbunden sein.

Das zumindest eine Halteelement 4 kann ferner dazu ausgebildet sein, eine auf den Energiespeicher 100 wirkende Aufprallbelastung (z. B. Crash-Belastung) an den Hauptlängsträger 2 bzw. den Fahrzeugrahmen des Kraftfahrzeugs durchzuleiten. Beispielsweise kann das zumindest eine Halteelement 4 ein (z. B. aus Stahl gefertigtes) Vollprofil aufweisen. Das zumindest eine Halteelement 4 kann somit zum Aufnehmen bzw. Weiterleiten großer Kräfte, wie sie z. B. in einem Aufprallereignis auftreten, ausgelegt sein. Weiterhin kann der entsprechende Hauptlängsträger 2 gerade sein. Der Hauptlängsträger 2 kann jedoch auch zumindest abschnittsweise eine gebogene oder abgewinkelte Form aufweisen. Beispielsweise kann der Hauptlängsträger 2 einen Endbereich aufweisen, der sich bezüglich einer Längsachse des Kraftfahrzeugs aufweitet oder verengt. Der Energiespeicher 100 kann an einem solchen gebogenen oder abgewinkelten Abschnitt des Hauptlängsträgers 2 gehaltert werden. Um hierbei auf vorteilhafte Weise eine möglichst parallel zur Längsachse des Kraftfahrzeugs verlaufende Außenkontur des Kraftfahrzeugs zu erreichen, kann der Energiespeicher 100 mittels unterschiedlich langer Halteelemente 4 am Hauptlängsträger 2 gehaltert sein (vgl. Figur 4A und 4B). Bevorzugt ist der Energiespeicher 100 mittels zweier unterschiedlich langer Halteelemente 4 am Hauptlängsträger 2 befestigt. Die Länge der entsprechenden Halteelemente 4 ist dabei vorzugsweise derart ausgebildet, dass ein von der Längsachse des Kraftfahrzeugs abweichender Verlauf des Hauptlängsträgers 2 ausgeglichen wird, sodass die jeweils zweiten Endbereiche der Halteelemente 4 denselben Abstand zur Fahrzeuglängsmittelebene aufweisen.

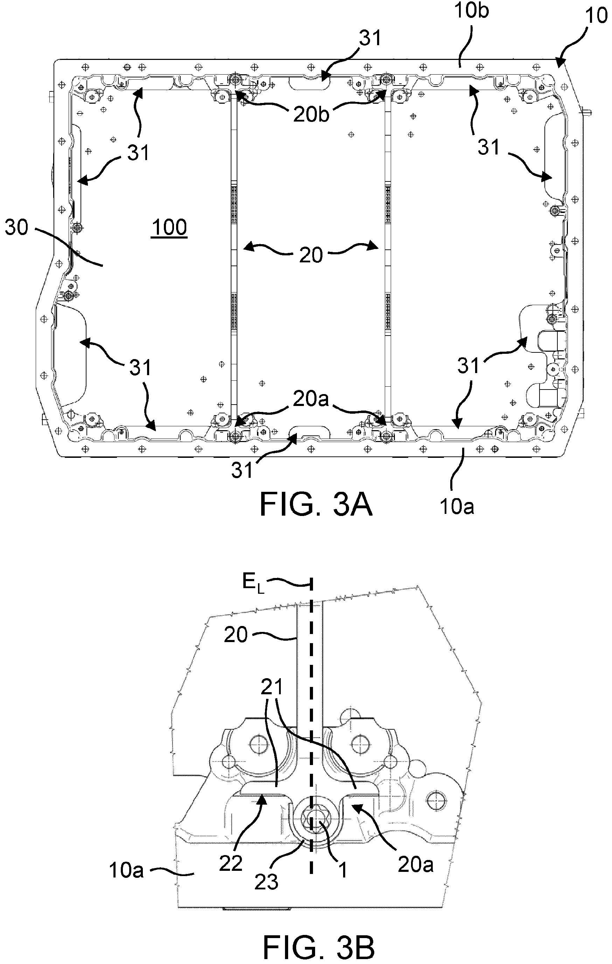

Wie unter anderem in Figur 1A gut zu erkennen ist, weist der elektrische Energiespeicher 100 ein Gehäuse 10 auf. Das Gehäuse 10, welches auch als Außengehäuse bezeichnet werden kann, kann im Wesentlichen rahmenförmig, vorzugsweise im Wesentlichen mehreckrahmenförmig, besonders bevorzugt im Wesentlichen rechteckrahmenförmig, sein. Bevorzugt ist das Gehäuse 10 vollständig umlaufend bzw. bildet einen geschlossenen, mehrseitigen (z. B. vierseitigen) Rahmen (vgl. z. B. Figur 3A). Das Gehäuse 10 kann z. B. aus einer Metalllegierung oder Kunststoff gefertigt sein.

Das Gehäuse 10 weist dabei eine erste Seitenwand 10a und eine zweite Seitenwand 10b auf. Bevorzugt ist die zweite Seitenwand 10b gegenüberliegend zur ersten Seitenwand 10a angeordnet. Besonders bevorzugt sind die erste und zweite Seitenwand 10a, 10b parallel zueinander orientiert. Zusätzlich kann das Gehäuse 10 auch weitere (z. B. eine dritte und vierte) Seitenwände umfassen. In einer bevorzugten Ausführungsform weist das Gehäuse 10 insgesamt vier Seitenwände auf.

Die erste Seitenwand 10a kann eine Innenfläche und eine Außenfläche aufweisen, welche auch als erste Innenfläche und erste Außenfläche bezeichnet werden können. Ebenso kann auch die zweite Seitenwand 10b eine Innenfläche und eine Außenfläche aufweisen, welche als zweite Innenfläche und zweite Außenfläche bezeichnet werden können. Auch im Fall weiterer Seitenwände können diese jeweils eine Innenfläche und eine Außenfläche umfassen. Die jeweiligen Innenflächen können ins Innere des Gehäuses 10 orientiert sein. Die jeweiligen Außenflächen können nach außen weisen. Insbesondere kann die erste Innenfläche gegenüberliegend zur zweiten Innenfläche angeordnet sein. Ferner kann die erste Außenfläche entgegengesetzt zur zweiten Innenfläche angeordnet sein.

Jede Seitenwand kann weiterhin zwei einander entgegensetzte Stirnflächen aufweisen, z. B. an einer Oberseite und an einer Unterseite der jeweiligen Seitenwand bzw. des Gehäuses 10. Jede Seitenwand kann durch die jeweiligen zwei entgegengesetzten Stirnflächen sowie die jeweilige Innenfläche und die jeweilige Außenfläche begrenzt sein.

Der elektrische Energiespeicher 100 kann ferner mehrere (z. B. prismatische) Batteriezellen (nicht dargestellt) aufweisen. Die mehreren Batteriezellen können innerhalb des Gehäuses 10 aufgenommen sein. D. h., die mehrere Batteriezellen können mittels des Gehäuses 10 gegen Umwelteinflüsse (z. B. Feuchtigkeit) und/oder Beschädigungen geschützt sein. Die mehrere Batteriezellen können somit vom Gehäuse 10 umhaust werden. Die mehreren Batteriezellen können z. B. Lithium-lonen-Batteriezellen sein. Die mehreren Batteriezellen können in Form eines oder mehrerer Batteriezellstapel (z. B. mit jeweils 15 Batteriezellen) angeordnet sein. Die Batteriezellen eines Batteriezellstapels sind bevorzugt miteinander verpresst. Die Batteriezellen eines Batteriezellstapels sind vorzugsweise in Reihe miteinander geschaltet. Die Batteriezellen eines Batteriezellstapels können ein Batteriemodul bilden bzw. zu einem Batteriemodul gruppiert sein.

Der elektrische Energiespeicher 100 weist weiterhin zumindest eine Versteifungsstruktur 20 zur Versteifung des Gehäuses 10 auf. Bevorzugt dient die zumindest eine Versteifungsstruktur 20 dazu, das Gehäuse 10 des elektrischen Energiespeichers 100 hinsichtlich möglicher auf das Gehäuse 10 wirkender Crash-Belastungen (z. B. infolge eines Aufpralls eines weiteren Fahrzeugs auf das Gehäuses 10) zu versteifen. Die zumindest eine Versteifungsstruktur 20 kann somit auch als Crashbauteil oder Crash-Strebe bezeichnet werden. Diese zumindest eine Versteifungsstruktur 20 kann dabei dazu dienen, im Crashfall bzw. bei einem Aufprallereignis auf eine der Seitenwände (z. B. die erste Seitenwand 10a) des Gehäuses 10 wirkende Crash-Belastungen (z. B. infolge eines direkten Aufpralls auf die erste Seitenwand 10a) an eine weitere der Seitenwände (z. B. die zweite Seitenwand 10b) durchzuleiten, wo sie z. B. über die Halteelemente 4 an den Hauptlängsträger 2 und damit in massive Rahmen- bzw. Karosserieteile abgeleitet werden können (vgl. Figur 4A und 4B).

Vorzugsweise ist die zumindest eine Versteifungsstruktur 20 innerhalb des Gehäuses 10 angeordnet. Besonderes bevorzugt ist die zumindest eine Versteifungsstruktur 20 dabei lösbar am Gehäuse 10 befestigt. D. h., die zumindest eine Versteifungsstruktur 20 kann vorzugsweise zerstörungsfrei aus dem elektrischen Energiespeicher 100 ausbaubar sein, was beispielsweise in Figur 1B dargestellt ist. Beispielsweise kann die zumindest eine Versteifungsstruktur 20 am Gehäuse 10 (z. B. an der ersten und zweiten Seitenwand 10a, 10b) verschraubt sein. Vorzugsweise ist die zumindest eine Versteifungsstruktur 20 dabei an der ersten Innenfläche der ersten Seitenwand 10a und/oder an der zweiten Innenfläche der zweiten Seitenwand 10b verschraubt.

Weiterhin ist vorgesehen, dass sich die zumindest eine Versteifungsstruktur 20 zwischen der ersten und zweiten Seitenwand 10a, 10b des Gehäuses 10 erstreckt. D. h., über die zumindest eine Versteifungsstruktur 20 können die erste und zweite Seitenwand 10a, 10b miteinander verbunden sein. Insbesondere können über die zumindest eine Versteifungsstruktur 20 die erste Innenfläche der ersten Seitenwand 10a und die zweite Innenfläche der zweiten Seitenwand 10b miteinander verbunden sein. Bevorzugt steht die zumindest eine Versteifungsstruktur 20 dabei senkrecht auf der ersten und/oder der zweiten Seitenwand 10a, 10b. D. h., eine Längsachse L der zumindest einen Versteifungsstruktur 20 kann bevorzugt mit der ersten und/oder zweiten Seitenwand 10a, 10b einen Winkel von im Wesentlichen 90° einschließen.

Als Längsachse L kann dabei bevorzugt eine Achse der zumindest einen Versteifungsstruktur 20 verstanden werden, welcher in Längsrichtung zur längsten Ausdehnung der Versteifungsstruktur 20 verläuft (vgl. Figur 1B). Weiterhin kann die zumindest eine Versteifungsstruktur 20 eine Querachse Q aufweisen. Als Querachse Q kann dabei bevorzugt eine senkrecht auf der Längsachse L stehende, in Querrichtung verlaufende Achse verstanden werden. Bevorzugt ist die Querachse Q in Richtung der kürzesten Ausdehnung der zumindest einen Versteifungsstruktur 20 orientiert. Letztlich kann die zumindest eine Versteifungsstruktur 20 eine Hochachse H aufweisen. Als Hochachse H kann dabei bevorzugt eine senkrecht auf der Längsachse L und Querachse Q stehende Achse verstanden werden. Vorzugsweise ist die Hochachse H in vertikaler Richtung bzw. parallel zur Schwerkraftrichtung orientiert.

Ferner umfasst die zumindest eine Versteifungsstruktur 20 einen aufgeweiteten Endbereich 20a. Dieser kann im Folgenden zur besseren Unterscheidung auch als erster aufgeweiteter Endbereich 20a bezeichnet werden. Der erste aufgeweitete Endbereich 20a kann beispielsweise T-förmig oder keilförmig ausgeweitet sein. Bevorzugt dient der erste aufgeweitete Endbereich 20a zum Abstützen der zumindest einen Versteifungsstruktur 20 auf der ersten Seitenwand 10a bei einem Aufprallereignis. Das Aufprallereignis ist hierbei vorzugsweise ein Aufprallereignis auf die erste Seitenwand 10a, wie z. B. ein Aufprall eines Fahrzeugs auf die erste Seitenwand 10a. Das Aufprallereignis kann somit insbesondere eine parallel zu einer Flächennormalen der ersten Seitenwand 10a orientierte Kraftkomponente umfassen.

Die zumindest eine Versteifungsstruktur 20 kann zusätzlich auch einen weiteren aufgeweiteten Endbereich 20b umfassen, der im Folgenden auch als zweiter aufgeweiteter Endbereich 20b bezeichnet werden kann. Bevorzugt sind der erste und zweite aufgeweitete Endbereich 20a, 20b jeweils an entgegengesetzten (z. B. distalen) Enden der zumindest einen Versteifungsstruktur 20 angeordnet. Bevorzugt dient der zweite aufgeweitete Endbereich 20b zum Abstützen der zumindest einen Versteifungsstruktur 20 auf der zweiten Seitenwand 10b bei einem Aufprallereignis. Hierdurch kann im Falle eines Aufpralls oder Crashs auf vorteilhafte Weise ein direkter Lastpfad bereitgestellt werden, der eine möglichst biegemomentenfreie Lastdurchleitung zwischen der ersten und zweiten Seitenwand 10a, 10b bzw. der Fahrzeugaußenseite und Rahmen ermöglicht.

In einer bevorzugten Ausführungsform ist vorgesehen, dass der erste aufgeweitete Endbereich 20a zwei in entgegengesetzte Richtungen vom ersten aufgeweiteten Endbereich 20a abstehende Flügelelemente 21 aufweist (vgl. z. B. Figur 1B). Die Flügelelemente 21 können jeweils z. B. in Form flächiger Auskragungen ausgebildet sein. Die Flügelelemente 21 können ferner jeweils im Wesentlichen plattenförmig sein. Die Flügelelemente 21 können in einer Richtung parallel zur Querachse der zumindest eine Versteifungsstruktur 20 vom ersten Endbereich 20a abragen. Weiterhin können sich die Flügelelemente 21 über die gesamte Höhe des ersten Endbereichs 20a erstrecken. Bevorzugt ist vorgesehen, dass die Flügelelemente 21 zumindest abschnittsweise eine Abstützfläche 25 des ersten Endbereichs 21 bzw. der zumindest einen Versteifungsstruktur 20 aufspannen (vgl. Figur 1B), wobei die Abstützfläche 25 bevorzugt zum Abstützen der zumindest eine Versteifungsstruktur 20 auf der ersten Seitenwand 10a beim Aufprallereignis dient.

Zudem oder alternativ kann auch der zweite aufgeweitete Endbereich 20b zwei in entgegengesetzte Richtungen vom zweiten aufgeweiteten Endbereich 20b abstehende Flügelelemente 21 aufweisen (vgl. z. B. Figur 1B). Diese Flügelelemente 21 des zweiten aufgeweiteten Endbereichs 20b können dabei, wie vorstehend im Zusammenhang mit den Flügelelementen 21 des ersten aufgeweiteten Endbereichs 20a beschrieben, ausgebildet sein.

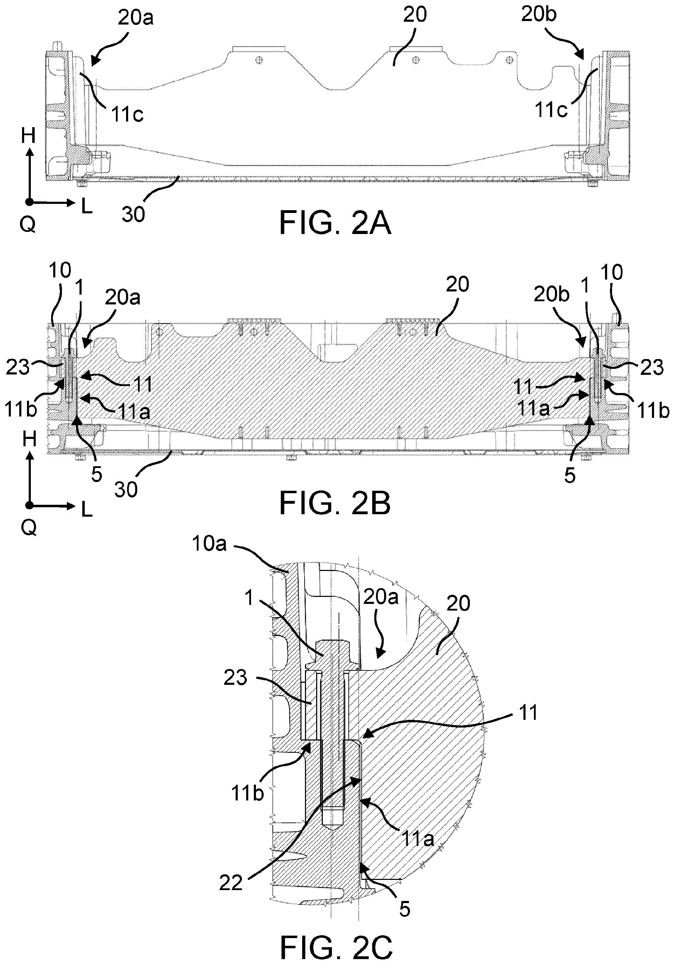

Der erste aufgeweitete Endbereich 20a kann ferner eine der ersten Seitenwand 10a zugewandte Stirnseite 22 aufweisen. Bevorzugt ist die Stirnseite 22 plan und/oder entlang einer Längsachse L der zumindest einen Versteifungsstruktur 20 orientiert. Besonders bevorzugt weist die Stirnseite 22 die durch die Flügelelemente 21 des ersten Endbereichs 20a aufgespannte Abstützfläche 25 auf. Die Stirnseite 22 und die erste Seitenwand 10a können durch einen Spalt 5 voneinander beabstandet sein (vgl. Figuren 2B und 2C). D. h., die Stirnseite 22 kann über den Spalt 5 an die erste Seitenwand 10a angrenzen. Der Spalt 5 kann beispielsweise kleiner als 1 mm sein. Vorzugsweise sind die Stirnseite 22 und die erste Seitenwand 10a durch den Spalt 5 derart voneinander beabstandet, dass die Stirnseite 22 und die erste Seitenwand 10a durch eine entlang einer Längsachse L der zumindest einen Versteifungsstruktur 20 wirkende Aufprall-Belastung beim Aufprallereignis, vorzugsweise flächig und/oder abstützend, in Anlage bringbar sind. D. h., die Spaltgröße (z. B. 0.6 mm) ist vorzugsweise so dimensioniert, dass beim Aufprallereignis ein möglichst flächiges Anliegen der entsprechenden Komponenten ermöglicht werden kann.

Bevorzugt weist auch der zweite aufgeweitete Endbereich 20b eine der zweiten Seitenwand 10b zugewandte Stirnseite auf. Besonders bevorzugt ist auch diese Stirnseite von der zweiten Seitenwand 10b durch einen entsprechenden Spalt 5 beabstandet. Hierbei können die entsprechenden Komponenten des zweiten aufgeweiteten Endbereichs 20b wiederum wie vorstehend im Zusammenhang mit dem ersten aufgeweiteten Endbereich 20a beschrieben ausgebildet sein.

Der erste aufgeweitete Endbereich 20a kann ferner einen von der Stirnseite 22 abstehenden Vorsprung 23 umfassen (vgl. Figur 1B). Der Vorsprung 23 kann beispielsweise hülsenförmig und/oder halbkreisförmig sein. Der Vorsprung kann entlang der Längsachse L der zumindest einen Versteifungsstruktur 20 von der Stirnseite 22 abragen. Bevorzugt ist der Vorsprung 23 damit nicht Teil der Stirnseite 22, sondern eine mit der Stirnseite 22, vorzugsweise integral-einstückig, verbundene Anformung an diese. Vorzugsweise erstreckt sich der Vorsprung 23 - bezüglich der Hochachse H der zumindest eine Versteifungsstruktur 20 - von einem oberen Rand der Stirnseite 22 in Richtung einer Mitte der Stirnseite 22. Besonders bevorzugt erstreckt sich der Vorsprung 23 dabei jedoch nur über maximal die Hälfte, vorzugsweise ein Drittel, besonders bevorzugt ein Viertel, einer Höhe der Stirnseite 22. Weiterhin kann der Vorsprung 23 bezüglich einer Längsmittelebene E_{L} der zumindest einen Versteifungsstruktur 20 versetzt angeordnet sein (vgl. Figur 3B). D. h., der Vorsprung 23 kann asymmetrisch zur Längsmittelebene E_{L} positioniert sein.

Der Vorsprung 23 kann ein, vorzugsweise entlang der Hochachse H verlaufendes, Durchgangsloch 24 aufweisen. In diesem kann ein, vorzugsweise stiftförmiges, Befestigungsmittel 1 (z. B. eine Schraube) aufgenommen sein (vgl. Figuren 2B und 2C). Über das Befestigungsmittel 1 kann die zumindest eine Versteifungsstruktur 20 an der ersten Seitenwand 10a befestigt (z. B. angeschraubt) sein.

Hierbei kann die erste Seitenwand 10a einen (z. B. stufenförmigen) Absatz 11 aufweisen. Bevorzugt ist der Absatz 11 dabei integral-einstückig mit der ersten Seitenwand 10a verbunden. Der Absatz 11 kann eine, vorzugsweise vertikale, Anlagefläche 11a zum Abstützen der Stirnseite 22 des aufgeweiteten Endbereichs 20a beim Aufprallereignis umfassen. Die Anlagefläche 11a ist bevorzugt plan. Die Anlagefläche 11a kann formangepasst zur Stirnseite 22 des aufgeweiteten Endbereichs 20a ausgebildet sein. D. h., die Anlagefläche 11a kann einen Flächenverlauf aufweisen, der zumindest abschnittweise formangepasst zu einem Flächenverlauf der Stirnseite 22 ausgebildet ist. Vorzugsweise sind die Anlagefläche 11a und die Stirnseite 22 voneinander beabstandet. D. h., bevorzugt stehen die Anlagefläche 11a und die Stirnseite 22 nicht unmittelbar in Kontakt miteinander. Die Anlagefläche 11a und die Stirnseite 22 können z. B. durch einen bzw. den Spalt 5 voneinander beabstandet sein. Vorzugsweise sind die Anlagefläche 11a und die Stirnseite 22 durch den Spalt 5 derart voneinander beabstandet, dass die Anlagefläche 11a und die Stirnseite 22 durch eine Aufprall-Belastung beim Aufprallereignis in Anlage bringbar sind.

Weiterhin kann der Absatz 11 eine, vorzugsweise horizontale, Auflagefläche 11b umfassen. Auf der Auflagefläche 11b kann der Vorsprung 23 des aufgeweiteten Endbereichs 20a zumindest abschnittsweise aufliegen (vgl. Figur 2C). Beispielsweise kann eine Unterseite des Vorsprungs 23 flächig auf der Auflagefläche 11b aufliegen. Hierbei kann die Auflagefläche 11b formangepasst zu einer Unterseite des Vorsprungs 23 ausgebildet sein. D. h., die Auflagefläche 11b kann einen Flächenverlauf aufweisen, der zumindest abschnittweise formangepasst zu einem Flächenverlauf der Unterseite des Vorsprungs 23 ausgebildet ist. Bevorzugt ist die Unterseite des Vorsprungs 23 und/oder die Auflagefläche 11b plan. Der Vorsprung 23 bzw. die Unterseite des Vorsprungs 23 kann dabei in unmittelbarem mechanischen Kontakt mit der Auflagefläche 11b stehen. Bevorzugt steht die zumindest eine Versteifungsstruktur 20 dabei ausschließlich über den Vorsprung 23 mit der ersten Seitenwand 10a bzw. dem Absatz 11 in Kontakt. Zur Fixierung der zumindest einen Versteifungsstruktur 20 bzw. des Vorsprungs 23 an der ersten Seitenwand 10a bzw. dem Absatz 11 kann der Absatz 11 ferner ein die Auflagefläche 11b durchdringendes Sackloch oder ein Durchgangsgewinde aufweisen. In diesem kann ein, vorzugsweise den Vorsprung durchdringendes, Befestigungsmittel 1 (z. B. eine Schraube) aufgenommen sein. Die zumindest eine Versteifungsstruktur 20 bzw. der Vorsprung 23 kann somit kraftschlüssig und/oder formschlüssig am Absatz 11 gehaltert sein.

Weiterhin kann der Absatz 11 zwei von der Auflagefläche 11b, vorzugsweise vertikal, abstehende Anformungen 11c umfassen (vgl. Figur 1A und Figur 2A). Die Anformungen 11c können sich jeweils von der Auflagefläche 11b aus entlang der Hochachse H der zumindest einen Versteifungsstruktur 20 seitlich am Vorsprung 23 erstrecken. Die Anformungen 11c können dabei eine unterschiedliche Höhe aufweisen. Beispielsweise kann eine der zwei Anformungen 11c höher als die weitere der zwei Anformungen 11c sein (vgl. Figur 1A). Die zwei Anformungen 11c können sich zumindest abschnittsweise auf Höhe der Stirnseite 22 erstrecken. Bevorzugt erstrecken sich die zwei Anformungen 11c zumindest abschnittsweise auf Höhe eines seitlich neben dem Vorsprung 23 befindlichen Bereichs der Stirnseite 22. Auf vorteilhafte Weise kann dadurch der Bereich zum Abstützen der zumindest eine Versteifungsstruktur 20 auf der ersten Seitenwand 10a beim Aufprallereignis vergrößert werden.

Ferner kann auch der zweite aufgeweitete Endbereich 20b einen von der entsprechenden Stirnseite des zweiten Endbereichs 20b abstehenden Vorsprung 23 umfassen (vgl. Figur 1B und 2B). Dieser kann dabei wie vorstehend im Zusammenhang mit dem Vorsprung des ersten aufgeweiteten Endbereichs 20a beschrieben ausgebildet sein. Weiterhin kann auch die zweite Seitenwand 10b einen entsprechenden (z. B. stufenförmigen) Absatz 11 aufweisen, welcher wie der vorstehend im Zusammenhang mit der ersten Seitenwand 10a beschriebene Absatz 11 ausgebildet sein kann.

Des Weiteren kann die vorgenannte zumindest eine Versteifungsstruktur 20 mehrere (z. B. zwei oder mehr) Versteifungsstrukturen 20 umfassen (vgl. Figur 1A, 3A, 4A und 4B). D. h., der elektrische Energiespeicher 100 kann mehrere entsprechende Versteifungsstrukturen 20 zur Versteifung des Gehäuses 10 aufweisen. Bevorzugt sind die mehreren Versteifungsstrukturen 20 dabei identisch ausgebildet und/oder gleichmäßig im elektrischen Energiespeicher 100 verteilt angeordnet. Bevorzugt sind die Versteifungsstrukturen 20 ferner jeweils zwischen zwei Batteriezellenstapeln bzw. Batteriemodulen angeordnet. Besonders bevorzugt ist die jeweilige Längsachse der Versteifungsstrukturen 20 dabei parallel zur Stapelrichtung der Batteriezellenstapel bzw. Batteriemodule. Die mehreren Versteifungsstrukturen 20 können somit parallel zueinander orientiert angeordnet sein. Auf vorteilhafte Weise können dadurch mehrere Lastpfade zur Aufnahme und Weiterleitung von Aufprallbelastungen bereitgestellt werden.

Um auf vorteilhafte Weise auch Querkräfte zwischen der ersten und zweiten Seitenwand 10a, 10b weiterzuleiten, kann der elektrische Energiespeicher 100 ferner auch eine Stützplatte 30 (z. B. ein Schubfeld) aufweisen. Bevorzugt dient auch die Stützplatte 30 zur Versteifung des Gehäuses 10 und/oder zur Stützung von im Gehäuse angeordneten Batteriezellen bzw. Batteriemodulen. Die Stützplatte 30 kann Betriebslasten aufnehmen und ableiten. Lediglich beispielhaft kann die Stützplatte 30 eine Stahlplatte sein. Die Stützplatte 30 kann hierbei bodenseitig, d. h. in einem unteren Bereich des Gehäuses 10, am Gehäuse 10 befestigt bzw. angeordnet sein. Die Stützplatte 30 kann am Gehäuse 10 z. B. verschraubt und/oder vernietet sein. Über die Stützplatte 30 können die erste und zweite Seitenwand 10a, 10b miteinander verbunden sein. Weiterhin können auch weitere Seitenwände mit der ersten und zweiten Seitenwand 10a, 10b verbunden sein. Bevorzugt verbindet die Stützplatte 30 alle Seitenwände des Gehäuses 10. Die Stützplatte 30 kann ferner von der zumindest einen Versteifungsstruktur 20 beabstandet angeordnet sein. D. h., zwischen der Stützplatte 30 und der zumindest einen Versteifungsstruktur 20 kann kein direkter mechanischer Kontakt bestehen. Ferner kann die Stützplatte 30 mehrere Aussparungen 31 zur Gewichtsreduktion umfassen. Diese Aussparungen 31 können z. B. umfangseitig verteilt an der Stützplatte 30 angeordnet sein. Bevorzugt sind die Aussparungen 31 dabei in beim Aufprallereignis üblicherweise wenig beanspruchten Bereichen angeordnet.

Durch die Kombination aus Versteifungsstruktur 20 (z. B. Querstrebe) und Stützplatte 30 (Schubfelder) können Lasten direkt durch das Gehäuse 10 abgeleitet und somit ein möglichst last- und deformationsfreier Raum für die Batteriekomponenten bereitgestellt werden. Insbesondere kann ein möglichst last- und deformationsfreier Raum für Zellmodule, ein Batterie-Kühlsystem, ein Batterie-Management-System und/oder eine Hochvolt- und Signalverteilung (z. B. Kabel) bereitgestellt werden. Durch den dadurch gegebenen Lastpfad kann eine beinahe biegemomentenfreie Lastdurchleitung von der Fahrzeugaußenseite in Richtung Fahrzeugrahmen ermöglicht werden. Zudem kann durch die Aufteilung der Lasten auf mehrere Lastpfade eine Überlastung des Gehäuses 10 vermieden werden, wodurch die Integrität des Gehäuses 10 sichergestellt wird (kein Aufbrechen oder Ähnliches). Insgesamt können so kompakte Abmaße der Gesamtinstallation sowie deutliche Gewichts- und Kostenvorteile erzielt werden. Weiterhin können die in der ISO 6469-4 geforderten Eigenschaften im Hinblick auf die Sicherheit einer Batterie nach einem Crash sichergestellt werden.

Um die beim Aufprallereignis auftretende Belastung dabei auf vorteilhafte Wiese möglichst gleichmäßig aufzunehmen und das Auftreten lokaler Überbeanspruchen zu verringern, kann der elektrische Energiespeicher 100 ferner optional eine Crashplatte 3, ein sog. crash panel, umfassen. Dieses kann, vorzugsweise fahrzeugaußenseitig, am Gehäuse 10 befestigt sein (vgl. Figur 4A und 4B). Die Crashplatte 3 kann mehrere elektrische Energiespeicher 100 überspannen und/oder einen Teil der Fahrzeugverkleidung bilden. Die Crashplatte 3 dient bevorzugt dazu, beim Aufprallereignis auf den Energiespeicher 100 wirkende Aufprallbelastungen möglichst gleichmäßig aufzunehmen und zu der zumindest einen Versteifungsstruktur 20 bzw. den mehreren Versteifungsstrukturen 20 weiterzuleiten. Über diese kann, wie vorstehend beschrieben, ein direkter Lastpfad durch das Gehäuse 10 bzw. zum Fahrzeugrahmen bereitgestellt werden.

Vorrangig wurde der elektrische Energiespeicher 100 in Hinblick auf ein, vorzugsweise rahmenförmiges, Gehäuse 10 beschrieben. Der Energiespeicher 100 kann jedoch auch mehrere Gehäuse 10 (z. B. jeweils mit entsprechenden Versteifungsstrukturen 20 und/oder Batteriezellen) umfassen (nicht ausdrücklich dargestellt). Die Gehäuse 10 können hierbei gestapelt, vorzugsweise ausgerichtet bzw. fluchtend miteinander, sein. Vorzugsweise sind die Gehäuse 10 mittels der Seitenwände, besonders bevorzugt an Stirnflächen der Seitenwände, gestapelt. Eine Stapelrichtung der Gehäuse 10 ist bevorzugt vertikal, d. h., die Gehäuse 10 können aufeinandergestapelt sein. Dementsprechend kann es beispielsweise ein oberstes und ein unterstes Gehäuse 10 geben. Die gestapelten Gehäuse 10 können dabei durch (z. B. längliche und/oder stabförmige) Befestigungselemente (z. B. Gewindestangen) zusammengehalten sein. Hierzu können die Seitenwände der Gehäuse 10 Durchgangslöcher aufweisen. Die Durchgangslöcher der Seitenwände können sich zwischen den entgegengesetzten Stirnflächen der Seitenwände erstrecken. Die Durchgangslöcher können im Wesentlichen äquidistant angeordnet sein.

Der Energiespeicher 100 kann ferner eine (obere) Abdeckung aufweisen (nicht dargestellt). Die Abdeckung kann das oberste Gehäuse 10 von oben abdecken. Die Abdeckung kann das oberste Gehäuse 10 versteifen. Die Abdeckung kann mehreckig, vorzugsweise rechteckig, sein. Die Abdeckung kann bevorzugt mittels Befestigungselementen an den Gehäusen 10 befestigt sein.

Der Energiespeicher 100 kann weiterhin einen Boden aufweisen (nicht dargestellt). Der Boden kann das unterste Gehäuse 10 von unten abdecken. Der Boden kann das unterste Gehäuse 10 versteifen. Der Boden kann plattenförmig sein. Der Boden kann mehreckig, vorzugsweise rechteckig, sein. Der Boden kann mittels mehrerer Befestigungselemente an dem untersten Gehäuse 10 befestigt sein.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Befestigungsmittel
- 2: Hauptlängsträger
- 3: Crashplatte
- 4: Halteelement
- 5: Spalt
- 10: Gehäuse
- 10a: Erste Seitenwand
- 10b: Zweite Seitenwand
- 11: Absatz
- 11a: Anlagefläche
- 11b: Auflagefläche
- 11c: Anformungen
- 20: Versteifungsstruktur
- 20a: Erster aufgeweiteter Endbereich
- 20b: Zweiter aufgeweiteter Endbereich
- 21: Flügelelemente
- 22: Stirnseite
- 23: Vorsprung
- 24: Durchgangsloch
- 25: Abstützfläche
- 30: Stützplatte
- 31: Aussparungen
- 100: Elektrischer Energiespeicher
- E_{L}: Längsmittelebene
- H: Hochachse
- L: Längsachse
- Q: Querachse

## Patentansprüche

1. Elektrischer Energiespeicher (100) für ein Kraftfahrzeug, vorzugsweise Nutzfahrzeug, aufweisend:
ein Gehäuse (10) mit einer ersten Seitenwand (10a) und einer, vorzugsweise der ersten Seitenwand gegenüberliegenden, zweiten Seitenwand (10b); und
zumindest eine, vorzugsweise lösbar am Gehäuse (10) befestigte, Versteifungsstruktur (20) zur Versteifung des Gehäuses (10), die sich zwischen der ersten und zweiten Seitenwand (10a, 10b) des Gehäuses (10) erstreckt;
wobei die zumindest eine Versteifungsstruktur (20) einen, vorzugsweise T-förmig, aufgeweiteten Endbereich (20a) zum Abstützen der zumindest eine Versteifungsstruktur (20) auf der ersten Seitenwand (10a) bei einem Aufprallereignis umfasst.

2. Elektrischer Energiespeicher (100) nach Anspruch 1, wobei die zumindest eine Versteifungsstruktur (20) mittels jeweils einer, vorzugsweise lösbaren, Schraubverbindung an der ersten und zweiten Seitenwand (10a, 10b) befestigt ist.

3. Elektrischer Energiespeicher (100) nach einem der vorherigen Ansprüche, wobei der aufgeweitete Endbereich (20a):
a) einen sich zur ersten Seitenwand (10a) hin verbreiternden Querschnitt aufweist; und/oder
b) bezüglich einer Querachse (Q) der zumindest einen Versteifungsstruktur (20) aufgeweitet ist; und/oder
c) zwei in entgegengesetzte Richtungen vom aufgeweiteten Endbereich (20a), vorzugsweise senkrecht, abstehende Flügelelemente (21) aufweist.

4. Elektrischer Energiespeicher (100) nach einem der vorherigen Ansprüche, wobei:
der aufgeweitete Endbereich (20a) eine der ersten Seitenwand (10a) zugewandte, vorzugsweise plane, Stirnseite (22) aufweist.

5. Elektrischer Energiespeicher (100) nach Anspruch 4, wobei:
die Stirnseite (22) und die erste Seitenwand (10a) durch einen Spalt (5) voneinander beabstandet sind; vorzugsweise derart, dass die Stirnseite (22) und die erste Seitenwand (10a) durch eine Aufprall-Belastung beim Aufprallereignis in Anlage bringbar sind.

6. Elektrischer Energiespeicher (100) nach Anspruch 4 oder 5, wobei:
der aufgeweitete Endbereich (20a) einen von der Stirnseite (22) abstehenden, vorzugsweise hülsenförmigen, Vorsprung (23) umfasst, über den die zumindest eine Versteifungsstruktur (20) an der ersten Seitenwand (10a), vorzugsweise lösbar, befestigt ist.

7. Elektrischer Energiespeicher (100) nach Anspruch 6, wobei der Vorsprung (23):
a) sich über maximal die Hälfte, vorzugsweise ein Drittel, besonders bevorzugt ein Viertel, einer Höhe der Stirnseite (22) erstreckt; und/oder
b) ein, vorzugsweise entlang einer Hochachse (H) der zumindest eine Versteifungsstruktur (20) orientiertes, Durchgangsloch (24) aufweist, und/oder
c) bezüglich einer Längsmittelebene (E_{L}) der zumindest eine Versteifungsstruktur (20) versetzt angeordnet ist.

8. Elektrischer Energiespeicher (100) nach einem der vorherigen Ansprüche, wobei:
die erste Seitenwand (10a) einen, vorzugsweise stufenförmigen, Absatz (11) aufweist, an dem die zumindest eine Versteifungsstruktur (20) befestigt ist.

9. Elektrischer Energiespeicher (100) nach Anspruch 8, falls rückbezogen auf Anspruch 6 oder 7, wobei:
a) der Absatz (11) und der Vorsprung (23) über ein den Vorsprung (23) durchdringendes Befestigungsmittel (1) miteinander verbunden, vorzugsweise verschraubt, sind; und/oder
b) der Absatz (11) ein Sackloch oder ein Durchgangsgewinde aufweist, das vorzugsweise fluchtend zum Durchgangsloch (24) des Vorsprungs (23) angeordnet ist;

10. Elektrischer Energiespeicher (100) nach Anspruch 8, falls rückbezogen auf Anspruch 6 oder 7, oder nach Anspruch 9, wobei der Absatz (11):
eine, vorzugsweise vertikale, Anlagefläche (11a) zum Abstützen der Stirnseite (22) des aufgeweiteten Endbereichs (20a) beim Aufprallereignis umfasst, und/oder
eine, vorzugsweise horizontale, Auflagefläche (11b) umfasst; auf der der Vorsprung (23) des aufgeweiteten Endbereichs (20a) zumindest abschnittsweise aufliegt.

11. Elektrischer Energiespeicher (100) nach Anspruch 10, wobei:
der Absatz (11) zwei von der Auflagefläche (11b), vorzugsweise vertikal, abstehende Anformungen (11c) umfasst, die sich seitlich des Vorsprungs (23) erstrecken und vorzugsweise jeweils eine Außenkontur aufweisen, die zumindest abschnittweise formangepasst zu einer Kontur des Vorsprungs (23) ausgebildet ist.

12. Elektrischer Energiespeicher (100) nach einem der vorherigen Ansprüche, ferner aufweisend eine Stützplatte (30) zur Versteifung des Gehäuses (10), über die die erste und zweite Seitenwand (10a, 10b) miteinander verbunden sind, vorzugsweise zum Durchleiten von Querkräften zwischen der ersten und zweiten Seitenwand (10a, 10b).

13. Elektrischer Energiespeicher (100) nach Anspruch 12, wobei:
die Stützplatte (30) von der zumindest einen Versteifungsstruktur (20) beabstandet angeordnet ist; und/oder umfangseitig mehrere Aussparungen (31) zur Gewichtsreduktion aufweist.

14. Elektrischer Energiespeicher (100) nach einem der vorherigen Ansprüche, wobei die zumindest eine Versteifungsstruktur (20):
a) im Wesentlichen gerade verläuft; und/oder
b) auf der ersten und zweiten Seitenwand (10a, 10b) senkrecht steht; und/oder
c) integral-einstückig ausgebildet ist; und/oder
d) als Vollprofil ausgebildet ist; und/oder
e) dazu dient, das Gehäuse (10) hinsichtlich möglicher auf das Gehäuse (10) wirkender Crash-Belastungen zu versteifen; und/oder
f) zum gebündelten Einleiten von Crashkräften in die zumindest eine Versteifungsstruktur (20) dient.

15. Elektrischer Energiespeicher (100) nach einem der vorherigen Ansprüche, wobei:
a) der elektrische Energiespeicher (100) mehrere Batteriezellen aufweist, die in dem Gehäuse (10) aufgenommen sind; und/oder
b) das Gehäuse (10) rahmenförmig, vorzugsweise rechteckrahmenförmig, ist; und/oder
c) die erste und zweite Seitenwand (10a, 10b) zwei einander gegenüberliegende und/oder parallel zueinander orientierte Seitenwände sind.
